# EUROPEAN PATENT SPECIFICATION

(11) **EP 0 508 380 B1**
(45) Date of publication and mention of the grant of the patent: **10.07.1996**
(21) Application number: 92106007.5
(22) Date of filing: 07.04.1992
(51) Int. Cl.: F16K 1/54

(54) **Pneumatic circuit fitting featuring a perfected air control valve device**
Pneumatisches Verbindungssystem mit einem verbesserten Luftregelventil
Raccord de circuit pneumatique constituant un clapet de réglage d'air

(30) Priority: 08.04.1991 IT BO910107
(43) Date of publication of application: 14.10.1992
(73) Proprietor: SISTEM PNEUMATICA S.r.l., I-40132 Bologna (IT)
(72) Inventor: Landi, Enzo, I-40168 San Lazzaro Di Savena (IT); Gamberini, Giovanni, I-40132 Bologna (IT)
(74) Representative: Cerbaro, Elena

(56) References cited:
- EP-A- 0 006 416
- FR-A- 2 206 461
- FR-A- 2 300 976
- GB-A- 2 150 671
- PATENT ABSTRACTS OF JAPAN vol. 7, no. 68 (M-201)(1213) 19 March 1983 & JP-A-57 208 364 (TOUHOKU MIKUNI KOGYO K.K.) 21 December 1982

## Description

The present invention relates to a pneumatic circuit fitting featuring a perfected air metering device.

Between the various components of a pneumatic circuit, fittings are provided for supplying predetermined amounts of compressed air, and which in turn are fitted inside with a metering device for regulating the same or a different air supply in both directions. Currently used metering devices consist of a tapered needle sliding inside an air supply orifice, so as to define a variable air passage, the maximum size of which is determined by the diameter of the orifice. At present, such metering devices, depending on the diameter of the air supply orifice, cater to one of several established air supply ranges frequently defined by or related to the diameter of the line connecting the fitting to a component, usually an actuator, on the circuit.

The EP-A-0006416 discloses a pneumatic circuit fitting that comprises two orifice, respectively an inlet and outlet orifice or vice versa; and a metering device defining two compressed air passages between said orifices, and featuring a sliding rod for first defining a gradually increasing opening in a first passage is wide open, a gradually increasing opening in said second passage.

This passages are obtained by a set of valves and spring means that make the production of said of said pneumatic circuit fitting.

It is an object of the present invention to provide a pneumatic circuit fitting featuring a metering device to cater to more than one air supply range.

Further aims and advantages of the present invention will be disclosed in the following description.

According to the present invention, there is provided a pneumatic circuit fitting comprising two orifices, respectively an inlet and outlet orifice or vice versa; and a metering device defining two compressed air passages, each of said passages being arranged between said two orifices, and featuring a sliding rod for first defining a gradually increasing opening in a first of said passages, and then, when said first passage is wide open, a gradually increasing opening in the second said passage, characterized by the fact that it comprises:
a first hollow body, a first end of which defining a first of said orifices presents means for connection to a first circuit component, and a second end of which is sealed;
a second hollow body extending from said first body and having means for connection to a second circuit component;
a third hollow body having a first portion housed in said first body, a second portion housed in said second body, and the free end of which defines a second of said orifices;
a first seal for pneumatically sealing said second portion and said second body;
a through hole formed in the base wall of said first portion, for pneumatically connecting the inside of said first body and the inside of said third body, and so defining said first passage; and
a first opening formed in the lateral wall of said first portion, for pneumatically connecting the inside of said first body and the inside of said third body, and so defining said second passage.

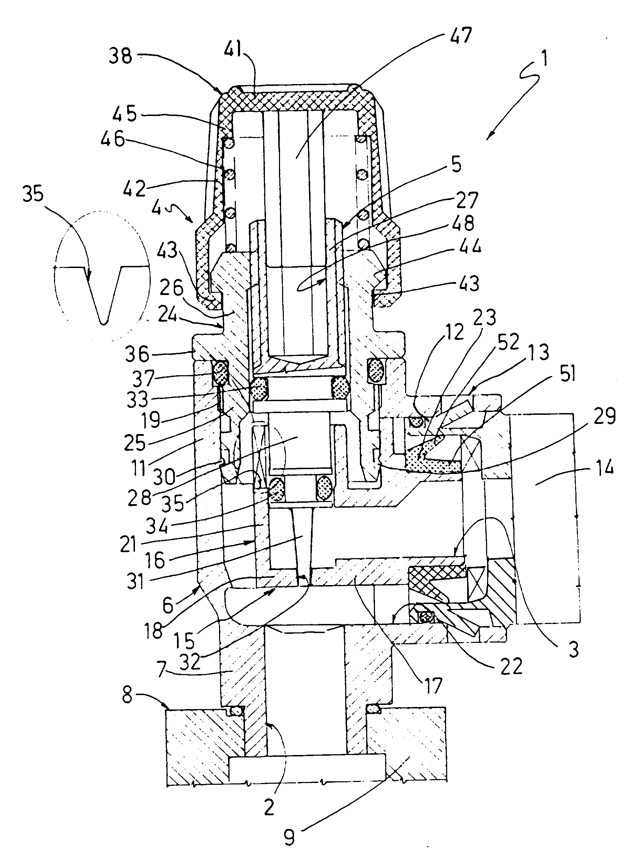

A preferred, non-limiting embodiment of the present invention will be described by way of example with reference to the accompanying drawing, in which number 1 indicates a pneumatic circuit fitting having two orifices, respectively an inlet and outlet orifice 2 and 3 or vice versa; and a metering device 4 defining, inside fitting 1, two compressed air passages between orifices 2 and 3. Metering device 4 presents a sliding rod 5 for first defining a gradually increasing opening in a first of said passages, and then, when said first passage is wide open, a gradually increasing opening in the second said passage.

Fitting 1 comprises a hollow cylindrical body 6 defined by a bottom portion 7, the free end of which defines orifice 2 and means 8 for connection to a circuit component 9, such as a main bench connection, an actuator, or another fitting. Body 6 is also defined by a longer top portion 11 coaxial with and having a larger inside and outside diameter than portion 7. A short cylindrical coupling 12 extends radially in one piece from portion 11, communicates internally with portion 11, and presents means 13 for connection to a circuit component consisting, in this case, of a fitting 14 for connection to a conduit.

Body 6 houses a hollow L-section body 15 defined in one piece with body 6 and having a first cylindrical portion 16 housed coaxially inside portion 11, and a second substantially cylindrical portion 17 originating radially from portion 16 and extending inside coupling 12, and the free end of which defines orifice 3. Portion 16 comprises a base wall 18 facing the inner annular shoulder defined between portions 7 and 11; and a lateral wall 21 extending towards the free end of portion 11. The wall portion of portion 11 from which coupling 12 originates and through which portion 17 extends presents a through opening 22 internally connecting portion 11 to fitting 14. Between the free end of portion 17 and one end of fitting 14, provision is made for an annular seal 23, which, depending on the type or how it is assembled, provides for preventing air supply through opening 22 in one or both directions, as described later on.

Metering device 4 comprises a hollow, substantially cylindrical body 24 coaxial with portion 11 and defined by a bottom portion 25 fitted downwards into the top part of portion 11; and a top portion 26 outside portion 11. The bottom end of portion 25 presents an annular projection 29 designed to engage two teeth 30 formed inside portion 11. Portion 25 also presents a knurled intermediate portion 19 cooperating with a corresponding portion of portion 11 for preventing rotation of body 24, which is thus rendered integral with body 6. Between portions 25 and 26, body 24 presents an annular flange 36 contacting the top edge of portion 11; and over portion 19, a seat for an annular seal 37 is defined between portions 25 and 11.

Commencing from the top, rod 5 comprises a first portion 27 engaging the inside of portion 26; a smaller diameter second portion 28 engaging the top of portion 16; and a conical tip 31, the axial position of which regulates a first passage defined by an axial through hole 32 in base wall 18. Portion 27 is threaded externally and screwed into a threaded portion formed inside portion 26; and presents an annular seat for a seal 33 between itself and portion 26. The bottom end of portion 28 presents an annular seat for a seal 34, which provides for sealing portions 28 and 16 for given axial positions of rod 5. The portion of wall 21 housing portion 28 presents a through opening 35 internally connecting portions 11 and 16 and constituting said second passage. As shown in the enlarged detail in the accompanying drawing, opening 35 is defined by a V-shaped notch.

In actual use, when rod 5 is in the bottommost position, hole 32 is closed by tip 31, thus cutting off air supply between orifices 2 and 3. As rod 5 moves upwards, a gradually increasing opening enabling air supply between orifices 2 and 3 is formed between tip 31 and hole 32, the maximum size of the opening corresponding with full withdrawal of tip 31 from hole 32. Up to this point, seal 34 is located beneath the bottom end of opening 35, thus cutting off air supply through opening 35. As rod 5 is raised further, however, the bottom of opening 35 eventually corresponds with the top of tip 31, thus producing an albeit small opening through which further air is supplied in addition to that channeled through hole 32. As rod 5 is raised even further, the area of opening 35 facing tip 31 gradually increases until a maximum is reached corresponding with the topmost axial position of rod 5, as described later on.

Metering device 4 comprises a rotary cap 38 for manually adjusting rod 5, and which comprises a base wall 41, and a substantially conical lateral wall 42 engaging portion 26 in such a manner as to enable cap 38 to rotate about its axis. More specifically, the bottom inner edge of wall 42 presents a number of teeth 43 engaging an annular projection 44 on portion 26 for preventing withdrawal of cap 38; and a preloaded spring 46 is fitted between shoulder 45 in cap 38 and the top edge of portion 26, for exerting upward pressure on cap 38. Inside cap 38, a hexagonal-section body 47 extends coaxially downwards from base wall 41 to engage a hexagonal-section dead hole 48 formed in portion 27 of rod 5. The bottommost axial position of rod 5 is determined by the annular shoulder defined by the different diameters of portions 27 and 28 contacting the top edge of wall 21; and the topmost axial position by rod 5 contacting cap 38, i.e. by the top edge of portion 27 contacting wall 41, or the bottom end of body 47 contacting the bottom of hole 48.

By virtue of body 47 engaging hole 48, rotation of cap 38 provides for rotating and axially sliding rod 5. Cap 38 may of course be dispensed with, in which case, rotation and axial displacement of rod 5 is effected using a hexagonal socket head wrench.

Seal 23 presents an annular portion 51 fitted about the end of portion 17; and an annular lip 52 extending obliquely outwards of fitting 1 and contacting the inner wall on the end of fitting 14. With this type of design and assembly, seal 23 prevents compressed air flowing through opening 22 from fitting 14 to fitting 1. Any air from fitting 14, in fact, simply flares lip 52 further against the end of the fitting, so that air flow to orifice 2 is limited solely to the aforementioned passages. In the case of air flow through component 9, on the other hand, this flexes lip 52 towards portion 51, thus detaching it from the inner wall of fitting 14 and enabling air flow to fitting 14 through opening 22, in addition to the aforementioned passages. Conversely, if seal 23 is assembled the other way round, i.e. with lip 52 extending obliquely inwards of fitting 1, air flow is permitted solely through the aforementioned passages in the case of component 9, and also through opening 22 in the case of fitting 14. This therefore provides for adjustable air flow in one direction, and greater, i.e. faster, flow in the opposite direction, as required, for example, by air-powered cylinder actuators, the piston of which operates at one speed in one direction and at a different speed in the other.

Seal 23 may be replaced, for example, by an O ring for sealing in both directions, in which case, communication between orifices 2 and 3 is permitted solely via the aforementioned passages, as required by air-powered cylinders with pistons operating at the same speed in both directions.

The advantages of the present invention will be clear from the foregoing description.

In particular, if pneumatic circuits are classified according to a specific air supply range, fitting 1 provides for catering to more than one range, by virtue of metering device 4, which provides for regulating the opening not only of a first passage (corresponding to one range) but also of a second passage (corresponding to a higher range), thus enabling the same fitting 1 to be employed on different circuits. This therefore provides for substantial saving in terms of assembly (no need to determine the right type of fitting for each circuit), purchasing (fewer parts to be ordered), and storage. Moreover, the rod on the metering device is provided with both a top and bottom limit stop; and, an important point to note, despite providing for two cascade passages, fitting 1 is extremely straightforward in design and therefore cheap to produce.

To those skilled in the art it will be clear that changes may be made to fitting 1 as described and illustrated herein.

For example, further cascade passages may be provided for catering to a greater number of air supply ranges. Rod 5 may be designed differently and consist, for example, of a number of truncated-cone-shaped portions, each operating in a respective passage similar to that defined by hole 32, in which case, portion 16 may present intermediate walls parallel to wall 18 and each having a through hole, so that upward movement of rod 5 opens one passage at a time. In place of cap 38, rod 5 may be rotated and adjusted using a tool, as described, or a small handwheel. Finally, a graduated scale may be provided on cap 38 or close to it on portion 11 for indicating the axial position of rod 5.

## Claims

1. A pneumatic circuit fitting comprising two orifices (2, 3), respectively an inlet and outlet orifice or vice versa; and a metering device (4) defining two compressed air passages (32, 35), each of said passages (32, 35) being arranged between said two orifices (2, 3), and featuring a sliding rod (5) for first defining a gradually increasing opening in a first (32) of said passages, and then, when said first passage (32) is wide open, a gradually increasing opening in the second (35) said passage, characterized by the fact that it comprises:
a first hollow body (6), a first end of which defining a first (2) of said orifices presents means (8) for connection to a first circuit component (9), and a second end of which is sealed;
a second hollow body (12) extending from said first body (6) and having means (13) for connection to a second circuit component (14);
a third hollow body (15) having a first portion (16) housed in said first body (6), a second portion (17) housed in said second body (12), an the free end of which defines a second (3) of said orifices;
a first seal (23) for pneumatically sealing said second portion (17) and said second body (12);
a through hole (32) formed in the base wall (18) of said first portion (16), for pneumatically connecting the inside of said first body (6) and the inside of said third body (15), and so defining said first passage; and
a first opening (35) formed in the lateral wall (21) of said first portion (16), for pneumatically connecting the inside of said first body (6) and the inside of said third body (15), and so defining said second passage.

2. A fitting as claimed in claim 1 characterized by the fact that said metering device (4) comprises a fourth hollow body (24) having a bottom portion (25) integrally engaged inside said second end of said first body (6), and a top portion (26) outside said first body (6).

3. A fitting as claimed in claim 2, characterized by the fact that said rod (5) presents, in succession, a first externally-threaded portion (27) engaging an internal thread in said top portion (26); a second smaller diameter portion (28) which, via a second seal (34), provides for sealing between said smaller diameter portion (28) and said first portion (16); and a conical tip (31) sliding inside said through hole (32); in actual use, from an axial position of said rod (5) wherein said tip (31) closes said through hole (32), thus cutting off air flow between said orifices (2, 3) said rod (5) being raised so as to produce, between said tip (31) and said through hole (32), an opening enabling air flow through said third body (15); and, upon said opening reaching maximum size corresponding to full withdrawal of said tip (31) from said through hole (32), said second seal (34) being raised so as to uncover increasingly larger portions of said first opening (35), and so produce an increasingly larger opening between said first opening (35) and the inside of said first body (6) and said third body (15).

4. A fitting as claimed in claim 3, characterized by the fact that said first opening (35) is defined by a V-shaped notch.

5. A fitting as claimed in claim 3 and/or 4, characterized by the fact that said first portion (27) of said rod (5) presents a dead hole (48) engaged by a tool (47) for rotating and displacing said rod (5).

6. A fitting as claimed in claim 5, characterized by the fact that it comprises a rotary cap (38) supported on said top portion (26) of said fourth body (24) and integrally housing said tool (47).

7. A fitting as claimed in claim 6, characterized by the fact that a preloaded spring (46) for exerting upward pressure on said cap (38) is fitted between a portion of said cap (38) and the top edge of said top portion (26).

8. A fitting as claimed in claim 6 and/or 7, characterized by the fact that said metering device (4) presents a top and bottom limit stop for said rod (5).

9. A fitting as claimed in at least one of the foregoing claims, characterized by the fact that said first seal (23) provides for pneumatic sealing on both sides.

10. A fitting as claimed in at least one of the foregoing claims from 1 to 8, characterized by the fact that, between said second body (12) and said second portion (17) of said third body (15), said first body (6) presents a second through opening (22); and by the fact that said first seal (23) provides for pneumatic sealing on one side only.

## Patentansprüche

1. Armatur für Pneumatikkreis mit zwei Anschlußöffnungen (2,3), einem Gaseintritt und einem Gasaustritt oder umgekehrt; und einer Dosiervorrichtung (4), die zwei Druckluftdurchlässe (32, 35) definiert, wobei jeder der Durchlässe (32, 35) zwischen den zwei Anschlußöffnungen (2,3) angeordnet ist, und die einen verschiebbaren Stößel (5) aufweist, der zuerst in einem ersten (32) der Durchlässe eine sich allmählich vergrößernde Öffnung und dann, wenn dieser Durchlaß (32) weit offen ist, eine sich allmählich vergrößernde Öffnung in dem zweiten (35) der Durchlässe definiert, **gekennzeichnet durch**
- einen ersten Hohlkörper (6), von dem ein erstes Ende eine erste (2) der Anschlußöffnungen definiert und ein Verbindungselement (8) zur Verbindung mit einer ersten Kreiskomponente (9) aufweist und von dem ein zweites Ende verschlossen ist;
- einen zweiten Hohlkörper (12), der sich vom ersten Hohlkörper (6) erstreckt und Verbindungselemente (13) zur Verbindung mit einer zweiten Kreiskomponente (14) aufweist;
- einen dritten Hohlkörper (15) mit einem ersten Teil (16), der im ersten Hohlkörper (6) angeordnet ist, und mit einem zweiten Teil (17), der im zweiten Hohlkörper (12) sitzt, und dessen freies Ende eine zweite (3) der Anschlußöffnungen definiert;
- eine erste Dichtung (23), die den zweiten Teil (17) und den zweiten Hohlkörper (12) gegeneinander abdichtet;
- eine in der Bodenwand (18) des ersten Teils (16) ausgebildete Bohrung (32), welche die Innenseite des ersten Hohlkörpers (6) und die Innenseite des dritten Hohlkörpers (15) pneumatisch verbindet und so den ersten Durchlaß definiert; und
- eine erste Durchgangsöffnung (35), die in der Seitenwand (21) des ersten Teils (16) ausgebildet ist, um die Innenseite des ersten Hohlkörpers (6) mit der Innenseite des dritten Hohlkörpers (15) pneumatisch zu verbinden und so den zweiten Durchlaß zu definieren.

2. Armatur nach Anspruch 1, **dadurch gekennzeichnet, daß** die Dosiervorrichtung (4) einen vierten Hohlkörper (24) mit einem integral im zweiten Ende des ersten Hohlkörpers (6) sitzenden Fußteil (25), und einem Kopfteil (26) außerhalb des ersten Hohlkörpers (6) aufweist.

3. Armatur nach Anspruch 2, **dadurch gekennzeichnet, daß** der Stößel (5) aufeinanderfolgend einen ersten Abschnitt (27) mit Außengewinde, das in ein Innengewinde im Kopfteil (26) eingreift, einen zweiten Abschnitt mit kleinerem Durchmesser (28), der über eine zweite Dichtung (34) eine Abdichtung zwischen dem Abschnitt mit kleinerem Durchmesser (28) und dem ersten Teil (16) liefert, und eine konische Spitze (31) aufweist, die in der Bohrung (32) verschiebbar ist, und zwar im Gebrauch von einer axialen Stellung des Stößels (5), bei der die Spitze (31) die Bohrung (32) verschließt und so den Luftstrom zwischen den Anschlußöffnungen (2, 3) unterbricht, zu einer angehobenen Stellung des Stößels (5), bei der zwischen der Spitze (31) und der Bohrung (32) eine Öffnung erzeugt wird, die einen Luftstrom durch den dritten Hohlkörper (15) zuläßt, und weiter wenn diese Öffnung die dem vollständigen Herausziehen der Spitze (31) aus der Bohrung (32) entsprechende maximale Größe erreicht, die zweite Dichtung (34) angehoben wird, um zunehmend größere Teile der ersten Durchgangsöffnung (35) aufzudecken und so eine zunehmend größere Öffnung zwischen der ersten Durchgangsöffnung (35) und der Innenseite des ersten Hohlkörpers (6) und des dritten Hohlkörpers (15) zu erzeugen.

4. Armatur nach Anspruch 3, **dadurch gekennzeichnet, daß** die erste Durchgangsöffnung (35) durch eine V-förmige Kerbe definiert ist.

5. Armatur nach Anspruch 3 und/oder 4, **dadurch gekennzeichnet, daß** der erste Abschnitt (27) des Stößels (5) eine Blindbohrung (48) aufweist, in die ein Werkzeug (47) zum Drehen und Verschieben des Stößels (5) eingreift.

6. Armatur nach Anspruch 5, **dadurch gekennzeichnet, daß** sie eine drehbare Kappe (38) aufweist, die auf dem Kopfteil (26) des vierten Hohlkörpers (24) gehalten ist und als integrales Gehäuse des Werkzeugs (47) ausgebildet ist.

7. Armatur nach Anspruch 6, **dadurch gekennzeichnet, daß** eine vorgespannte Feder (46), die auf die Kappe (38) einen nach oben gerichteten Druck ausübt, zwischen einen Teil der Kappe (38) und die Oberkante des Kopfteils (26) eingesetzt ist.

8. Armatur nach Anspruch 6 und/oder 7 **dadurch gekennzeichnet, daß** die Dosiervorrichtung (4) einen Kopfstop und einen Fußstop für den Stößel (5) aufweist.

9. Armatur nach wenigstens einem der vorangehenden Ansprüche, **dadurch gekennzeichnet, daß** die erste Dichtung (23) auf beiden Seiten eine pneumatische Abdichtung bewirkt.

10. Armatur nach wenigstens einem der vorangehenden Ansprüche 1 bis 8, **dadurch gekennzeichnet, daß** zwischen dem zweiten Hohlkörper (12) und dem zweiten Teil (17) des dritten Hohlkörpers (15) der erste Hohlkörper (6) eine zweite Durchgangsöffnung (22) aufweist und daß die erste Dichtung (23) nur an einer Seite pneumatisch abdichtet.

## Revendications

1. Un raccord de circuit pneumatique comprenant deux orifices (2, 3), respectivement, un orifice d'entrée et un orifice de sortie ou réciproquement; et un dispositif de dosage (4) définissant deux passages d'air comprimé (32, 35), chacun desdits passages (32, 35) étant disposé entre lesdits deux orifices (2, 3), et formé par un barreau coulissant (5) pour, tout d'abord, définir une ouverture augmentant progressivement dans un premier (32) desdits passages et, ensuite, lorsque ledit premier passage (32) est ouvert en grand, une ouverture augmentant progressivement dans le second (35) desdits passages, caractérisé en ce qu'il comprend:
un premier corps creux (6) dont une première extrémité définissant un premier (2) desdits orifices présente des moyens (8) de raccordement à un premier élément de circuit (9), et dont une seconde extrémité est fermée de façon étanche;
un second corps creux (12) s'étendant à partir dudit premier corps (6) et comprenant des moyens (13) de raccordement à un second élément de circuit (14);
un troisième corps creux (15) comprenant une première partie (16) logée dans ledit premier corps (6), une seconde partie (17) logée dans ledit second corps (12), et dont l'extrémité libre définit un second (3) desdits orifices;
un premier joint d'étanchéité (23) pour obturer pneumatiquement de façon étanche ladite seconde partie (17) et ledit second corps (12);
un trou traversant (32) ménagé dans la paroi de base (18) de ladite première partie (16) pour relier pneumatiquement l'intérieur dudit premier corps (6) et l'intérieur dudit troisième corps (15) et définir ainsi ledit premier passage; et
une première ouverture (35) formée dans la paroi latérale (21) de ladite première partie (16) pour relier pneumatiquement l'intérieur dudit premier corps (6) et l'intérieur dudit troisième corps (15) , et définir ainsi ledit second passage.

2. Un raccord selon la revendication 1, caractérisé en ce que ledit dispositif de dosage (4) comprend un quatrième corps creux (24) comprenant une partie de fond (25) engagée monobloc à l'intérieur de ladite seconde extrémité dudit premier corps (6), et une partie supérieure (26) à l'extérieur dudit premier corps (6).

3. Un raccord selon la revendication 2, caractérisé en ce que ledit barreau (5) présente, en succession, une première partie à filetage extérieur (27) vissée dans un taraudage de ladite partie supérieure (26); une seconde partie de diamètre plus petit (28) qui, par l'intermédiaire d'un second joint (34) assure l'étanchéité entre ladite partie de diamètre plus petit (28) et ladite première partie (16); et un embout conique (31) glissant à l'intérieur dudit trou traversant (32); en service effectif, à partir d'une position axiale dudit barreau (5) dans laquelle ledit embout (31) ferme ledit trou (32), ceci interrompant le courant d'air entre lesdits orifices (2, 3), ledit barreau (5) étant relevé de manière à produire, entre ledit embout (31) et ledit trou traversant (32), une ouverture laissant passer le courant d'air à travers ledit troisième corps (15); et, lorsque ladite ouverture atteint sa dimension maximale correspondant au retrait total dudit embout (31) dudit trou traversant (32), ledit second joint (34) étant relevé de manière à découvrir de façon croissante des parties plus grandes de ladite première ouverture (35) et à produire ainsi une ouverture de grandeur croissante entre ladite première ouverture (35) et l'intérieur dudit premier corps (6) et ledit troisième corps (15).

4. Un raccord selon la revendication 3, caractérisé en ce que ladite première ouverture (35) est définie par une encoche en forme de V.

5. Un raccord selon la revendication 3 et/ou 4, caractérisé en ce que ladite première partie (27) dudit barreau (5) présente un trou borgne (48) engagé en prise par un outil (47) pour faire tourner et déplacer ledit barreau (5).

6. Un raccord selon la revendication 5, caractérisé en ce qu'il comprend un capuchon tournant (38) monté sur ladite partie supérieure (26) dudit quatrième corps (24) en enfermant totalement ledit outil (47).

7. Un raccord selon la revendication 6, caractérisé en ce qu'un ressort sous précontrainte (46) pour exercer une pression vers le haut sur ledit capuchon (38) est monté entre une partie dudit capuchon (38) et sur le bord supérieur de ladite partie supérieure (26).

8. Un raccord selon la revendication 6 et/ou 7, caractérisé en ce que ledit dispositif de dosage (4) présente une butée de fin de course supérieure et inférieure pour ledit barreau (5).

9. Un raccord selon, au moins, l'une des précédentes revendications, caractérisé en ce que ledit premier joint (23) assure une étanchéité pneumatique aux deux extrémités.

10. Un raccord selon, au moins, l'une des précédentes revendications 1 à 8, caractérisé en ce qu'entre ledit second corps (12) et ladite seconde partie (17) dudit troisième corps (15), ledit premier corps (6) présente une seconde ouverture traversante (22); et que ledit premier joint (23) assure l'étanchéité pneumatique d'un côté seulement.
